# EUROPEAN PATENT SPECIFICATION

(11) **EP 0 848 191 B1**
(45) Date of publication and mention of the grant of the patent: **26.02.2003**
(21) Application number: 97203657.8
(22) Date of filing: 22.11.1997
(51) Int. Cl.: F16H 61/00

(54) **Method and device for controlling the transmission ratio of a belt variator in a transmission unit for a motor vehicle**
Verfahren und Vorrichtung zur Steuerung des Übersetzungsverhältnisses eines Riemenvariators in eine Getriebeeinheit eines Kraftfahrzeuges
Procédé et dispositif de commande du rapport d'un variateur à courroie dans une unité de transmission d'un véhicule automobile

(30) Priority: 10.12.1996 BE 9601027
(43) Date of publication of application: 17.06.1998
(73) Proprietor: VCST, naamloze vennootschap, 3800 Sint-Truiden (BE)
(72) Inventor: van de Hardt Aberson, Frederik Ernst Carel, 4600 Richelle/Vise (BE); Buckinx, Ronald, 3512 Stevoort (BE)
(74) Representative: Donné, Eddy

(56) References cited:
- EP-A- 0 676 564
- EP-A- 0 681 119
- EP-A- 0 697 548
- WO-A-90/04119

## Description

The present invention concerns a method and device for controlling the transmission ratio of a belt variator, in particular a belt variator in a transmission unit for a motor vehicle.

In particular, the invention concerns a method and device whereby the transmission ratio can be controlled according to two methods, namely a method whereby the transmission ratio is automatically altered as a function of different characteristics of speed and torque and such on the one hand, and a method whereby the transmission ratio is altered gradually as a result of signals given by the driver of the vehicle on the other hand.

With the second method is obtained that the transmission will change in a manner similar to that of a conventional gearbox. It has indeed appeared that it is desirable for certain applications that, instead of making use of the conventional automatic transmission, one can switch to the above-mentioned second method.

According to the second method, the signals for gearing up and gearing down respectively are given for example by briefly exerting a pressure on a gear lever, in the one direction to each time go into a higher gear, and in the other direction to each time go into a lower gear.

Consequently, this method is sometimes called the "tip mode".

A known embodiment thereof is described in EP 0.697.548.

The invention aims a method and device for controlling the transmission ratio of a belt variator in a transmission unit for a motor vehicle whereby the handling in the "tip mode" is considerably more comfortable than is the case with all the devices known until now.

To this aim, the invention in the first place as defined in claim 1 concerns a method for controlling the transmission ratio of a belt variator in a transmission unit for a motor vehicle, comprising the step of controlling the transmission ratio in a tip mode such that the transmission ratio is controlled as a function of gear change signals given by a driver of the motor vehicle, thereby following a plurality of predetermined fixed control lines according to a variogram defining an operational field including engine speeds, vehicle speeds and an origin, which method is characterized in that the control lines are determined so that a rotational speed difference in each of a plurality of successive transitions between the control lines at a particular vehicle speed is substantially equal to the rotational speed difference in an immediately preceding transition when gearing up and gearing down.

According to an alternative of the invention as defined in claim 21, there may exist a limited difference between the speed differences of immediately preceding transitions when gearing up and gearing down, said difference being less than 10% of the largest one of the two subsequent rotational speed differences.

The fact that large rotational speed differences are excluded or are at least avoided to a large extent results in that the transitions during the gearing up and gearing down respectively are characterized by rotational speed changes which are identical or more or less identical to one another for each change, which results in a very comfortable and predictable handling of the motor vehicle. A further result is that the rotational speed differences when changing between the lower gears no longer differ very much from those when changing between the higher gears, which also contributes to a more comfortable and predictable handling of the vehicle.

Preferably, the control lines are selected such that at least in a part of the operation field, preferably the largest part of the operation field, most of the above-mentioned rotational speed differences per transition between the successive transitions are practically identical to one another, better still are entirely identical to one another, for one and the same vehicle speed or even for different vehicle speeds.

In order to optimize the method according to the invention, the situation of the control lines is preferably selected such that they comply with one or several additional criteria which will be explained in the detailed description.

According to the most preferred embodiment, the control lines are characterized by a parallel or almost parallel course, preferably parallel to the control line of the overdrive ratio, as well as by mutual distances which are equal or almost equal to one another.

The invention also concerns a device for implementing the above-mentioned method, whose characteristics will become clear from the following description.

In order to better explain the characteristics of the invention, the following preferred embodiments are described as an example only without being limitative in any way, with reference to the accompanying drawings, in which:
figure 1 schematically represents a continuously variable transmission which is equipped with a device according to the invention;
figures 2 and 3 show variograms for two embodiments of the invention.

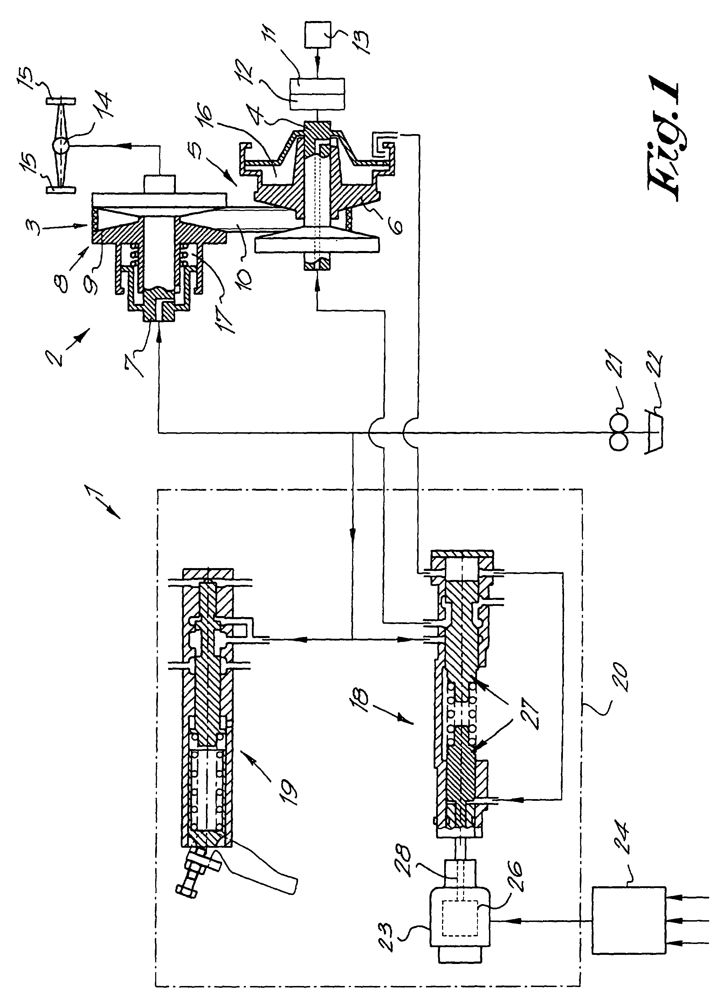

Figure 1 schematically shows a device 1 for controlling a transmission unit 2 which is equipped with a belt variator 3.

The belt variator 3 consists of a primary pulley 5 placed on an ingoing shaft 4 with at least one pulley half 6 which can be axially moved; a secondary pulley 8 placed on a driven shaft 7 with at least one pulley half 9 which can be axially moved; and an endless transmission element 10, such as a belt, provided between the pulleys 5 and 8, one and other such that the transmission ratio between the shafts 4 and 7 can be altered by axially moving the pulley halves 6 and 9.

The ingoing shaft 4 is usually driven by means of a drive-off coupling 11 and a reversing unit 12 driven by the motor 13 of the motor vehicle concerned. The movement of the driven shaft 7 is transmitted onto a number of wheels 15 of the vehicle via a differential gear 14 or such.

The pulley halves 6 and 9 are moved by means of hydraulic pressure cylinders working in conjunction therewith, a primary pressure cylinder 16 and a secondary pressure cylinder 17 respectively, whose pressures are regulated by means of a primary regulating valve 18 and a secondary regulating valve 19.

The regulating valves 18 and 19 are part of a hydraulic regulating unit 20 which is fed in the known manner by means of a hydraulic medium under pressure which is pumped up from a reservoir 22 by means of a pump 21.

The transmission ratio of the belt variator 3 is mainly controlled by means of the primary regulating valve 18 which is controlled in turn by a drive element 23 which receives signals from a control unit 24.

The behaviour of the continuously variable transmission is, as explained in EP 0.697.548, characterized by what is called the variogram, i.e. a diagram in which the different operating conditions are represented as a function of the velocity V of the motor vehicle and the rotational speed n of the motor 13 or thus of the ingoing shaft 4.

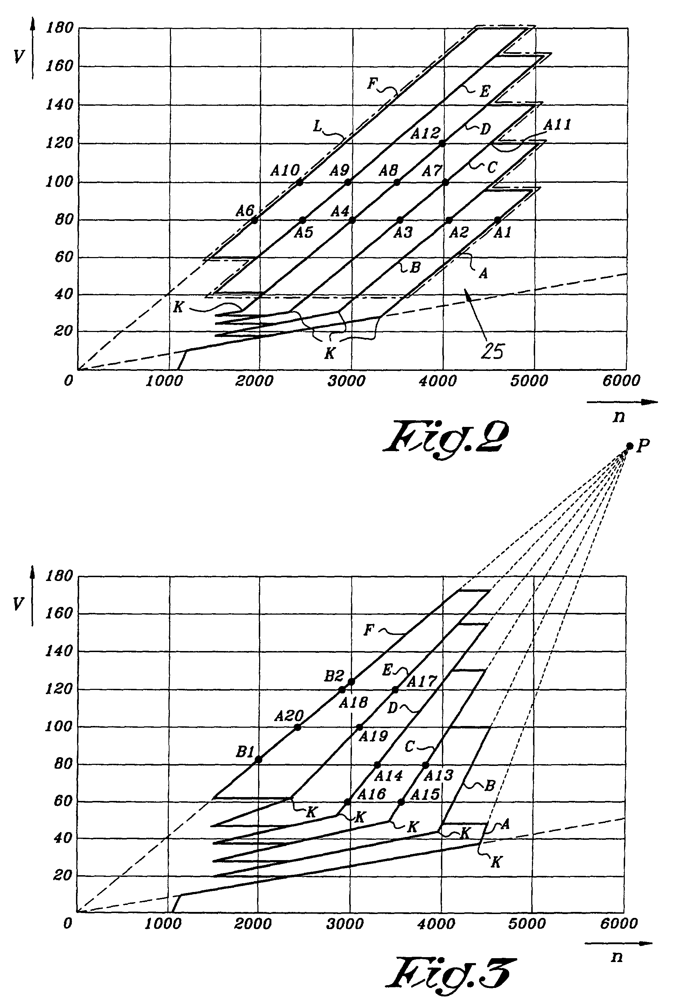

As is represented in the variogram of figure 2, when the above-mentioned "tip mode" is applied, only specific control lines, in this case A-B-C-D-E-F, can be followed. One can only switch from one control line to the other in this case, which is done by emitting a signal, in particular what is called a "tip signal", for example by means of the gear lever of the vehicle. Consequently, although a continuously variable transmission is applied, a change behaviour is obtained which in some respects resembles to a stepped change behaviour of a gearbox with fixed transmission ratios.

It should be noted that the control lines A-B-C-D-E-F are selected such that a handling is obtained which is clearly and deliberately different from the handling of a transmission unit which is provided with gears with fixed transmission ratios.

The invention is special among others in that, as represented in figure 2, control lines A-B-C-D-E-F are followed in said variogram which are selected such that, when gearing up and gearing down respectively, large rotational speed differences per transition are excluded between the selected control lines.

Preferably, the control lines A-B-C-D-E-F are selected such that at least in a part of the operation field, the rotational speed differences which arise during the changing are identical or practically identical to one another, even with different vehicle speeds.

In particular, the occurring rotational speed differences for all the above-mentioned transitions, between all the control lines, are preferably identical to one another for the largest part of the operation field.

This implies that the rotational speed alterations at transitions between the successive control lines, in other words the horizontal distances between the control lines A-B-C-D-E-F, are equal to one another or only differ from one another within certain limits.

This means that in the variogram as represented in figure 2, the distances A1-A2, A2-A3, A3-A4, A4-A5, A5-A6 differ little from one another or are preferably equal to one another, and preferably also differ little from or are equal to the distances related to other velocities, such as for example the distances A7-A8, A9-A10, A11-A12, etc.

It is clear that these criteria are preferably to be complied with in an ideal manner, preferably the criteria which dictate that the rotational speed differences of the different transitions must be identical to one another, but it is also clear that the ideal circumstances can be deviated from while still obtaining an advantageous effect. However, these deviations per successive transition shall preferably not exceed 10% at the same velocity. In the variogram of figure 2, this implies that the distance A2-A3 shall deviate no more than 10% from the distance A1-A2, that A3-A4 shall deviate no more than 10% from A2-A3, that A4-A5 shall deviate no more than 10% from A3-A4, etc. This also implies that the distance A8-A9 shall deviate no more than 10% from the distance A7-A8.

According to the most preferred embodiment, the control lines A-B-C-D-E-F are selected such that, in the above-mentioned part of the operation field, and better still in the entire operation field, the difference between the largest rotational speed difference and the smallest rotational speed difference is kept under 10% of the above-mentioned largest rotational speed difference. This means that in a variogram in which the number of revolutions are represented in a linear manner, there will be no horizontal distances between the control lines A-B-C-D-E-F which deviate more than 10% from one another.

As is further represented in figure 2, the control according to the invention will preferably be carried out such that control lines A-B-C-D-E-F are followed which run parallel or almost parallel to one another for the largest part of the operation field.

It is clear that the control lines A-B-C-D-E-F are preferably exactly parallel to one another, but that deviations may arise here as well while still remaining within the scope of the invention. However, these deviations are preferably restricted to deviations as far as parallelism is concerned which, in the case where the control lines A-B-C-D-E-F diverge away from the origin of the variogram in the above-mentioned part of the operation field, expressed as a change in the rotational speed per speed difference of 20 km/h, amount to 10% at the most, whereas in the case where the control lines A-B-C-D-E-F converge in the direction away from the origin, the deviation may exceed said 10%, as will become clear from the variogram described in figure 3.

The above implies that for example in figure 2, in the case where certain control lines would diverge in relation to one another as one goes further away from the origin, the distance A7-A8 may differ no more 10% from the distance A3-A4, the distance A11-A12 may differ no more than 10% from the distance A7-A8, etc.

It should be noted that, as represented in figure 2, the control is preferably carried out such that the operation field to which the variogram is related has a form whereby the right bottom angle 25, in particular the angle which is situated in the field which is characterized by low vehicle speeds and high rotational speeds, is round or cut off respectively. Thus is obtained that high rotational speeds at low speeds are excluded, as a result of which the handling of the vehicle and the noise are positively influenced.

According to a special embodiment, which is represented in figure 3, the control lines A-B-C-D-E-F are made to converge towards the top, preferably into one and the same point P. Thus is obtained a more dynamic variant.

As the rotational speed steps are smaller in this case at high speeds than at low speeds, this results in less decrease of the engine power during the gearing actions, which contributes to the above-mentioned dynamic character.

The convergence or mutual approach between the control lines amounts to 30% at the most per speed difference of 20 km/h. This implies that for example the rotational speed difference determined by the distance A13-A14 deviates 30% at the most from the rotational speed difference which is determined by the distance A15-A16, and for example that nor the distance A17-A18 deviates more than 30% from the distance A19-A20.

As is represented in figures 2 and 3, at least a number of the control lines in the central part of the variogram, in other words over the largest part of their length, preferably run straight. In the lower part may occur, as is represented, breakpoints K or slight curves, either bendings or rounded breakpoints, from where the control lines are directed more or less to the origin of the variogram. Under these breakpoints K, the control lines concerned preferably also run parallel or almost parallel to one another, whereby the same deviations may be allowed for, however, as mentioned above for the top parts of the control lines A-B-C-D-E-F.

As is further represented in figures 2 and 3, the top control line F, which coincides with what is called the "overdrive ratio", normally extends through the origin of the variogram.

It should be noted that the lines which are determined by the extreme ratios "Low" and "Overdrive", namely the control lines A and F, form two of the four limits of the operation field. All the other control lines are preferably related to and derived from the "Overdrive ratio".

In the largest part of the operation field, in particular the part of the operation field which is situated above the above-mentioned breakpoints K, the slope of the control lines shall be selected such that it exceeds 30 km/h per 1000 rev/min. This implies for example that in the variogram of figure 3, the slope of the control line F is such that the speed difference belonging to the points B1 and B2 is larger than 30 km/h, which in this case is about 40 km/h. Thus is excluded that the control lines in the main part of the operation field run too flat, and that small deviations in the course of these control lines would result in large rotational speed differences. Further is obtained that the control must not be made extremely sensitive.

The part of the variogram onto which the above-mentioned criteria at least apply, preferably consists of the central part of the variogram, in other words the part where most of the driving and gearing is done.

Further, the control lines A-B-C-D-E-F are preferably selected such that the part of the variogram in which these control lines comply with the above-mentioned criteria forms at least 75% of the entire operation field. By the entire operation field is meant in this context the surface of the variogram which is. situated between the control line A, the control line F, the lower transitions between the different control lines and the top transitions between the different control lines.

According to a practical embodiment, the control lines are selected such that the above-mentioned part of the operation field, in other words the part in which the control lines comply with the above-mentioned characteristics, coincides at least with the part of the operation field which is situated above 60 km/h in the variogram, and better still with the part which is situated above 40 km/h, in other words the part which is outlined in figure 2 with the dot and dash line L.

It should be noted that embodiments are represented in figures 2 and 3 with six control lines, but it is clear that, according to variants, it is also possible to make embodiments with more or less than six control lines. An embodiment with six control lines is preferred, however, as the rotational speed differences per transition can be kept relatively small then. More than six control lines are less advantageous, however, as the driver will have to change more.

It is clear that the invention also concerns a device 1 for realizing the above-mentioned method. As represented in figure 1, it consists basically in that use is made of a control unit 24 provided with the required control programs, such that when the "tip mode" is activated, control lines will automatically be followed which comply with the above-described method.

According to the most preferred embodiment of the device 1, the primary regulating valve 18 will be controlled to this end by means of a drive element 23 which is formed of an actuator. This actuator may for example consist of a stepping motor 26 which can axially move the valve discs 27 of the primary regulating valve 18 by means of a worm transmission 28. Such an actuator allows for a very precise control according to the set control line.

The control unit 24 preferably makes sure that, when extreme limit values are reached, which may occur when the driver does not give the change signal in time, there will be an automatic transition to a higher or lower control line.

It should be noted that by the above-mentioned "transitions" are meant theoretical transitions at one and the same speed, in other words horizontal transitions in the above-mentioned variogram.

Finally, it should be noted that all the above-mentioned characteristics which are defined based on the form of the variogram, apply to a variogram represented as a coordinate system with linear coordinates.

The present invention is by no means restricted to the embodiments described by way of example and represented in the accompanying drawings; on the contrary, such a method and device for controlling a transmission ratio of a belt variator can be made according to several variants while still remaining within the scope of the invention as defined by the claims.

## Claims

1. Method for controlling the transmission ratio of a belt variator in a transmission unit for a motor vehicle, comprising the step of controlling the transmission ratio in a tip mode such that the transmission ratio is controlled as a function of gear change signals given by a driver of the motor vehicle, thereby following a plurality of predetermined fixed control lines (A-B-C-D-E-F) according to a variogram defining an operational field including engine speeds, vehicle speeds and an origin, **characterized in that** the control lines (A-B-C-D-E-F) are determined so that a rotational engine speed difference in each of a plurality of successive transitions between the control lines (A-B-C-D-E-F) at a particular vehicle speed (V) is substantially equal to the rotational speed difference in an immediately preceding transition when gearing up and gearing down.

2. Method according to claim 1, **characterized in that** the control lines (A-B-C-D-E-F) are selected such that at least in a part of the operational field, the above-mentioned rotational speed differences (A1-A2, A2-A3; A3-A4; A4-A5; A5-A6; A7-A8; A9-A10; A11-A12) are practically identical to one another for most transitions, even at different vehicle speeds.

3. Method according to claim 2, **characterized in that** the control lines (A-B-C-D-E-F) are selected such that at least in a part of the operational field, the above-mentioned rotational speed differences (A1-A2, A2-A3; A3-A4; A4-A5; A5-A6; A7-A8; A9-A10; A11-A12) are practically identical to one another for all the transitions between all the successive control lines (A-B-C-D-E-F).

4. Method according to any of the preceding claims, **characterized in that** the control lines (A-B-C-D-E-F) are selected such that the rotational speed differences are identical to one another for at least a part of the operational field.

5. Method according to any of the preceding claims, **characterized in that** the control lines (A-B-C-D-E-F) are determined so that these control lines run substantially parallel to one another for a majority of the operational field.

6. Method according to claim 5, **characterized in that** said control lines (A-B-C-D-E-F) run exactly parallel to one another for said majority of the operational field.

7. Method according to claim 1, **characterized in that** the control lines (A-B-C-D-E-F) are determined so that for the majority of the operational field at least two of these control lines (A-B-C-D-E-F), in a direction seen away from the origin of the variogram, diverge away from each other at a maximum of 10% expressed as a change in the rotational speed per 20 km/h vehicle speed difference.

8. Method according to claim 1, **characterized in that** the control lines (A-B-C-D-E-F) are determined so that for the majority of the operational field at least two of these control lines (A-B-C-D-E-F), in a direction seen away from the origin of the variogram, converge in respect to each other.

9. Method according to claim 8, **characterized in that** control lines (A-B-C-D-E-F) are followed which converge into one point (P).

10. Method according to claim 8 or 9, **characterized in that** control lines (A-B-C-D-E-F) are selected whose convergence and/or approach per speed difference of 20 km/h amounts to maximum 30%.

11. Method according to any of claims 2 to 10, **characterized in that** in the above-mentioned part of the operation field, the slope of all control lines is selected larger than 30 km/h per interval of 1000 rev/min.

12. Method according to any of claims 2 to 11, **characterized in that** several control lines (A-B-C-D-E-F) are followed which are straight lines for the largest part of their length.

13. Method according to any of claims 2 to 12, **characterized in that** the above-mentioned part of the operation field is formed of the central part of the variogram.

14. Method according to any of claims 2 to 13, **characterized in that** the control lines are selected such that the above-mentioned part of the operation field, in other words the part in which the control lines comply with the above-mentioned characteristics, forms at least 75% of the entire operation field.

15. Method according to any of claims 2 to 14, **characterized in that** the control lines are selected such that the above-mentioned part of the operation field, in other words the part in which the control lines comply with the above-mentioned characteristics, covers at least the part (L) of the operation field which is situated above 40 km/h in the variogram.

16. Method according to any of the preceding claims, **characterized in that** the top control line (F), in particular the control line belonging to the "overdrive", goes through the origin of the variogram.

17. Method according to any of the preceding claims, **characterized in that** the control is carried out such that the operation field exclude high rotational speeds at low vehicle speeds by cutting off the angle formed by a horizontal axis of the variogram and a control line (A) which is located in a region of low vehicle speeds and high rotational speeds (Fig. 2).

18. Method according to any of the preceding claims, **characterized in that** one or several control lines are bent or slightly round at the bottom.

19. Method according to claim 18, **characterized in that** several control lines are bent or slightly round at the bottom and **in that** the lower parts run parallel or almost parallel in relation to one another.

20. Method according to any of the preceding claims, **characterized in that** the transmission ratio is automatically altered in certain predetermined borderline cases, whereby there is an automatic transition to a following, higher or lower, control line.

21. Method for controlling the transmission ratio of a belt variator in a transmission unit for a motor vehicle, comprising the step of controlling the transmission ratio in a tip mode such that the transmission ratio is controlled as a function of gear change signals given by a driver of the motor vehicle, thereby following a plurality of predetermined fixed control lines (A-B-C-D-E-F) according to a variogram defining an operational field including engine speeds, vehicle speeds and an origin, **characterized in that** the control lines (A-B-C-D-E-F) are determined so that a rotational speed difference in each of a plurality of successive transitions between the control lines (A-B-C-D-E-F) at a particular vehicle speed (V) differs from the rotational engine speed difference in an immediately preceding transition when gearing up and gearing down, with an amount which is less than 10% of the largest one of the two subsequent rotational speed differences.

22. Method according to claim 21, **characterized in that** at least in a part of the operational field, the difference between the largest rotational speed difference and the smallest rotational speed difference is maintained under 10% of the above-mentioned largest rotational speed difference.

23. Device for realizing the method according to any of the preceding claims, consisting of a belt variator with pulleys and an associated belt and a hydraulic control unit (20) with which the transmission ratio of the belt variator (3) can be altered, whereby pulley halves (6-9) of the pulleys (5-8) can be axially moved and are controlled by means of pressure cylinders (16-17) which are in turn controlled by means of at least one regulating valve (18-19), **characterized in that** this regulating valve (18) is controlled by means of an actuator which is in turn controlled by means of an electronic control unit (24) which makes sure that a control is carried out according to control lines and which complies with the above-mentioned method.

24. Device according to claim 23, **characterized in that** said control unit (24) is designed to allow for two methods, namely a method whereby the control is changed automatically on the one hand and a control whereby the method as described in any of claims 1 to 22 is applied on the other hand.

## Patentansprüche

1. Verfahren zur Steuerung des Übersetzungsverhältnisses eines Riemenvariators in einer Getriebeeinheit eines Kraftfahrzeugs, umfassend den Schritt des Steuerns des Übersetzungsverhältnisses als Tastenfunktion, sodass das Übersetzungsverhältnis als Funktion von durch einen Fahrer des Kraftfahrzeugs gegebenen Signalen zum Bedienen der Gangschaltung gesteuert wird, wobei eine Vielzahl zuvor festgelegter fester Kontrolllinien (A-B-C-D-E-F) gemäß einem Variogramm mit Motorgeschwindigkeiten, Fahrzeuggeschwindigkeiten und einem Ursprung, das einen Operationsbereich definiert, verfolgt wird, **dadurch gekennzeichnet, dass** die Kontrolllinien (A-B-C-D-E-F) so festgelegt sind, dass beim Herauf- oder Herunterschalten eine Motordrehzahldifferenz in jedem einer Vielzahl aufeinanderfolgender Übergänge zwischen den Kontrolllinien (A-B-C-D-E-F) bei einer bestimmten Fahrzeuggeschwindigkeit (V) im Wesentlichen gleich der Drehzahldifferenz in einem unmittelbar vorangehenden Übergang ist.

2. Verfahren gemäß Anspruch 1, **dadurch gekennzeichnet, dass** die Kontrolllinien (A-B-C-D-E-F) so gewählt sind, dass zumindest in einem Teil des Operationsbereichs die oben erwähnten Drehzahldifferenzen (A1-A2, A2-A3; A3-A4; A4-A5; A5-A6; A7-A8; A9-A10; A11-A12) für die meisten Übergänge praktisch identisch zueinander sind, selbst bei verschiedenen Fahrzeuggeschwindigkeiten.

3. Verfahren gemäß Anspruch 2, **dadurch gekennzeichnet, dass** die Kontrolllinien (A-B-C-D-E-F) so gewählt sind, dass zumindest in einem Teil des Operationsbereichs die oben erwähnten Drehzahldifferenzen (A1-A2, A2-A3; A3-A4; A4-A5; A5-A6; A7-A8; A9-A10; A11-A12) für alle Übergänge zwischen allen aufeinanderfolgenden Kontrolllinien (A-B-C-D-E-F) praktisch identisch zueinander sind.

4. Verfahren gemäß einem der vorgenannten Ansprüche, **dadurch gekennzeichnet, dass** die Kontrolllinien (A-B-C-D-E-F) so gewählt sind, dass die Drehzahldifferenzen zumindest für einen Teil des Operationsbereichs identisch zueinander sind.

5. Verfahren gemäß einem der vorgenannten Ansprüche, **dadurch gekennzeichnet, dass** die Kontrolllinien (A-B-C-D-E-F) so gewählt sind, dass diese Kontrolllinien für einen Großteil des Operationsbereichs im Wesentlichen parallel zueinander verlaufen.

6. Verfahren gemäß Anspruch 5, **dadurch gekennzeichnet, dass** besagte Kontrolllinien (A-B-C-D-E-F) für besagten Großteil des Operationsbereichs exakt parallel zueinander verlaufen.

7. Verfahren gemäß Anspruch 1, **dadurch gekennzeichnet, dass** die Kontrolllinien (A-B-C-D-E-F) so festgelegt sind, dass für den Großteil des Operationsbereichs zumindest zwei dieser Kontrolllinien (A-B-C-D-E-F) in einer Richtung abgewandt vom Ursprung des Variogramms mit maximal 10% voneinander abweichen, ausgedrückt als Veränderung in der Drehzahl pro 20 km/h Fahrzeuggeschwindigkeitsdifferenz.

8. Verfahren gemäß Anspruch 1, **dadurch gekennzeichnet, dass** die Kontrolllinien (A-B-C-D-E-F) so festgelegt sind, dass für den Großteil des Operationsbereichs zumindest zwei dieser Kontrolllinien (A-B-C-D-E-F) in einer Richtung abgewandt vom Ursprung des Variogramms in Bezug zueinander konvergieren.

9. Verfahren gemäß Anspruch 8, **dadurch gekennzeichnet, dass** Kontrolllinien (A-B-C-D-E-F) verfolgt werden, die in einem Punkt (P) konvergieren.

10. Verfahren gemäß Anspruch 8 oder 9, **dadurch gekennzeichnet, dass** Kontrolllinien (A-B-C-D-E-F) gewählt werden, deren Konvergenz und/oder Annäherung pro Geschwindigkeitsdifferenz von 20 km/h sich auf maximal 30% beläuft.

11. Verfahren gemäß einem der Ansprüche 2 bis 10, **dadurch gekennzeichnet, dass** in dem oben erwähnten Teil des Operationsbereichs die Neigung aller Kontrolllinien größer als 30 km/h pro Intervall von 1000 U/min gewählt wird.

12. Verfahren gemäß einem der Ansprüche 2 bis 11, **dadurch gekennzeichnet, dass** mehrere Kontrolllinien (A-B-C-D-E-F) verfolgt werden, die für den größten Teil ihrer Länge gerade Linien sind.

13. Verfahren gemäß einem der Ansprüche 2 bis 12, **dadurch gekennzeichnet, dass** der oben erwähnte Teil des Operationsbereichs vom zentralen Teil des Variogramms gebildet wird.

14. Verfahren gemäß einem der Ansprüche 2 bis 13, **dadurch gekennzeichnet, dass** die Kontrolllinien derart gewählt sind, dass der oben erwähnte Teil des Operationsbereichs, mit anderen Worten, der Teil, worin die Kontrolllinien den oben erwähnten Merkmalen entsprechen, zumindest 75% des gesamten Operationsbereichs bildet.

15. Verfahren gemäß einem der Ansprüche 2 bis 14, **dadurch gekennzeichnet, dass** die Kontrolllinien derart gewählt sind, dass der oben erwähnte Teil des Operationsbereichs, mit anderen Worten, der Teil, worin die Kontrolllinien den oben erwähnten Merkmalen entsprechen, zumindest den Teil (L) des Operationsbereichs abdeckt, der im Variogramm über 40 km/h angeordnet ist.

16. Verfahren gemäß einem der vorgenannten Ansprüche, **dadurch gekennzeichnet, dass** die obere Kontrolllinie (F), insbesondere die Kontrolllinie, die zum "Overdrive" gehört, durch den Ursprung des Variogramms verläuft.

17. Verfahren gemäß einem der vorgenannten Ansprüche, **dadurch gekennzeichnet, dass** die Steuerung derart ausgeführt wird, dass der Operationsbereich hohe Drehzahlen bei niedrigen Fahrzeuggeschwindigkeiten ausschließt, indem der gebildete Winkel durch eine horizontale Achse des Variogramms und eine Kontrolllinie (A) abgeschnitten wird, die sich in einem Bereich niedriger Fahrzeuggeschwindigkeiten und hoher Drehzahlen befindet (Fig.2).

18. Verfahren gemäß einem der vorgenannten Ansprüche, **dadurch gekennzeichnet, dass** ein oder mehrere Kontrolllinien unten umgebogen oder leicht abgerundet sind.

19. Verfahren gemäß Anspruch 18, **dadurch gekennzeichnet, dass** mehrere Kontrolllinien unten umgebogen oder leicht abgerundet sind, und dass die unteren Teile parallel oder nahezu parallel zueinander verlaufen.

20. Verfahren gemäß einem der vorgenannten Ansprüche, **dadurch gekennzeichnet, dass** das Übersetzungsverhältnis in gewissen, zuvor festgelegten Grenzfällen automatisch geändert wird, wobei ein automatischer Übergang zu einer folgenden, höheren oder tieferen Kontrolllinie stattfindet.

21. Verfahren zur Steuerung des Übersetzungsverhältnisses eines Riemenvariators in einer Getriebeeinheit eines Kraftfahrzeugs, umfassend den Schritt des Steuerns des Übersetzungsverhältnisses als Tastenfunktion, sodass das Übersetzungsverhältnis als Funktion von durch einen Fahrer des Kraftfahrzeugs gegebenen Signalen zum Bedienen der Gangschaltung gesteuert wird, wobei eine Vielzahl zuvor festgelegter fester Kontrolllinien (A-B-C-D-E-F) gemäß einem Variogramm mit Motorgeschwindigkeiten, Fahrzeuggeschwindigkeiten und einem Ursprung, das einen Operationsbereich definiert, verfolgt wird, **dadurch gekennzeichnet, dass** die Kontrolllinien (A-B-C-D-E-F) so festgelegt sind, dass sich beim Herauf- und Herunterschalten eine Drehzahldifferenz in jedem einer Vielzahl von aufeinanderfolgenden Übergängen zwischen den Kontrolllinien (A-B-C-D-E-F) bei einer bestimmten Fahrzeuggeschwindigkeit (V) von der Motordrehzahldifferenz in einem unmittelbar vorangehenden Übergang um einen Betrag unterscheidet, der weniger als 10% der größten der zwei aufeinanderfolgenden Drehzahldifferenzen beträgt.

22. Verfahren gemäß Anspruch 21, **dadurch gekennzeichnet, dass** zumindest in einem Teil des Operationsbereichs die Differenz zwischen der größten Drehzahldifferenz und der kleinsten Drehzahldifferenz unter 10% der oben erwähnten größten Drehzahldifferenz gehalten wird.

23. Vorrichtung zur Verwirklichung des Verfahrens gemäß einem der vorgenannten Ansprüche, bestehend aus einem Riemenvariator mit Riemenscheiben und einem zugehörigen Riemen und einer hydraulischen Steuereinheit (20), womit das Übersetzungsverhältnis des Riemenvariators (3) verändert werden kann, wobei Riemenscheibenhälften (6-9) der Riemenscheiben (5-8) axial bewegt werden können und mittels Druckzylindern (16-17) gesteuert werden, die ihrerseits mittels zumindest eines Regelventils (18-19) gesteuert werden, **dadurch gekennzeichnet, dass** dieses Regelventil (18) mittels eines Auslösers gesteuert wird, der seinerseits mittels einer elektronischen Steuereinheit (24) gesteuert wird, die sicherstellt, dass eine Steuerung gemäß den Kontrolllinien ausgeführt wird, die dem oben erwähnten Verfahren entspricht.

24. Vorrichtung gemäß Anspruch 23, **dadurch gekennzeichnet, dass** besagte Steuereinheit (24) dazu entworfen ist, dass sie zwei Verfahren gestattet, nämlich ein Verfahren, wobei einerseits die Steuerung automatisch verändert wird, und eine Steuerung, wobei andererseits das Verfahren, wie in einem der Ansprüche 1 bis 22 beschrieben, angewendet wird.

## Revendications

1. Procédé pour commander le rapport de transmission d'un variateur de vitesse du type à courroie dans une unité de transmission pour un véhicule à moteur, comprenant l'étape consistant à commander le rapport de transmission dans un mode de basculement de telle sorte que le rapport de transmission est commandé en fonction de signaux de changement de vitesse fournis par un conducteur du véhicule à moteur, en suivant ainsi plusieurs lignes de commande fixes prédéterminées (A - B - C - D - E - F) conformément à un variogramme définissant un champ opérationnel englobant des vitesses du moteur, des vitesses du véhicule et une origine, **caractérisé en ce que** les lignes de commande (A - B - C - D - E - F) sont déterminées de telle sorte qu'une différence de vitesse de rotation du moteur dans chacune de plusieurs transitions successives entre les lignes de commande (A - B - C - D - E - F) à une vitesse particulière du véhicule (V) est essentiellement égale à la différence de vitesse de rotation dans une transition directement précédente lors d'une multiplication et lors d'une démultiplication.

2. Procédé selon la revendication 1, **caractérisé en ce que** les lignes de commande (A - B - C - D - E - F) sont sélectionnées de telle sorte que, au moins dans une partie du champ opérationnel, les différences de vitesse de rotation mentionnées ci-dessus (A1 - A2, A2 - A3, A3 - A4, A4 - A5, A5 - A6, A7 - A8, A9 - A10, A11 - A12) sont pratiquement identiques l'une à l'autre pour la plupart des transitions, même à des vitesses du véhicule différentes.

3. Procédé selon la revendication 2, **caractérisé en ce que** les lignes de commande (A - B - C - D - E - F) sont sélectionnées de telle sorte que, au moins dans une partie du champ opérationnel, les différences de vitesse de rotation mentionnées ci-dessus (A1 - A2, A2 - A3, A3 - A4, A4 - A5, A5 - A6, A7 - A8, A9 - A10, A11 - A12) sont pratiquement identiques l'une à l'autre pour toutes les transitions entre toutes les lignes de commande successives (A - B - C - D - E - F).

4. Procédé selon l'une quelconque des revendications précédentes, **caractérisé en ce que** les lignes de commande (A - B - C - D - E - F) sont sélectionnées de telle sorte que les différences de vitesse de rotation sont identiques l'une à l'autre pour au moins une partie du champ opérationnel.

5. Procédé selon l'une quelconque des revendications précédentes, **caractérisé en ce que** les lignes de commande (A - B - C - D - E - F) sont déterminées de telle sorte que ces lignes de commande s'étendent de manière essentiellement parallèle l'une à l'autre pour la majeure partie du champ opérationnel.

6. Procédé selon la revendication 5, **caractérisé en ce que** lesdites lignes de commande (A - B - C - D - E - F) s'étendent de manière exactement parallèle l'une à l'autre pour ladite majeure partie du champ opérationnel.

7. Procédé selon la revendication 1, **caractérisé en ce que** les lignes de commande (A - B - C - D - E - F) sont déterminées de telle sorte que, pour la majeure partie du champ opérationnel, au moins deux de ces lignes de commande (A - B - C - D - E - F), dans une direction s'écartant de l'origine du variogramme, divergent l'une par rapport à l'autre au maximum à concurrence de 10 %, exprimés comme changement de la vitesse de rotation par 20 km/heure de différence de vitesse du véhicule.

8. Procédé selon la revendication 1, **caractérisé en ce que** les lignes de commande (A - B - C - D - E - F) sont déterminées de telle sorte que, pour la majeure partie du champ opérationnel, au moins deux de ces lignes de commande (A - B - C - D - E - F), dans une direction s'écartant de l'origine du variogramme, convergent l'une par rapport à l'autre.

9. Procédé selon la revendication 8, **caractérisé en ce qu'**on suit des lignes de commande (A - B - C - D - E - F) qui convergent en un point (P).

10. Procédé selon la revendication 8 ou 9, **caractérisé en ce qu'**on sélectionne des lignes de commande (A - B - C - D - E - F) dont la convergence et/ou l'approche par la différence de vitesse de 20 km/heure s'élève à un maximum de 30 %.

11. Procédé selon l'une quelconque des revendications 2 à 10, **caractérisé en ce que**, dans la partie susmentionnée du champ opérationnel, la pente de toutes les lignes de commande est sélectionnée pour être supérieure à 30 km/heure par intervalle de 1000 tours/minute.

12. Procédé selon l'une quelconque des revendications 2 à 11, **caractérisé en ce qu'**on suit plusieurs lignes de commande (A - B - C - D - E - F) qui représente des lignes rectilignes sur la majeure partie de leur longueur.

13. Procédé selon l'une quelconque des revendications 2 à 12, **caractérisé en ce que** la partie susmentionnée du champ opérationnel représente la partie centrale du variogramme.

14. Procédé selon l'une quelconque des revendications 2 à 13, **caractérisé en ce qu'**on sélectionne les lignes de commande de telle sorte que la partie susmentionnée du champ opérationnel, en d'autres termes la partie dans laquelle les lignes de commande répondent aux caractéristiques susmentionnées, représente au moins 75 % du champ opérationnel total.

15. Procédé selon l'une quelconque des revendications 2 à 14, **caractérisé en ce qu'**on sélectionne les lignes de commande de telle sorte que la partie susmentionnée du champ opérationnel, en d'autres termes la partie dans laquelle les lignes de commande répondent aux caractéristiques susmentionnées, recouvre au moins la partie (L) du champ opérationnel qui est située au-dessus de 40 km/heure dans le variogramme.

16. Procédé selon l'une quelconque des revendications précédentes, **caractérisé en ce que** la ligne de commande supérieure (F), en particulier la ligne de commande faisant partie de la "surmultiplication", passe par l'origine du variogramme.

17. Procédé selon l'une quelconque des revendications précédentes, **caractérisé en ce que** la commande est mise en oeuvre de telle sorte que le champ opérationnel exclut des vitesses de rotation élevées à de petites vitesses du véhicule en coupant l'angle formé par un axe horizontal du variogramme et une ligne de commande (A) qui est située dans une région de petites vitesses du moteur et de grandes vitesses de rotation (figure 2).

18. Procédé selon l'une quelconque des revendications précédentes, **caractérisé en ce qu'**une ligne de commande ou plusieurs lignes de commande sont courbées ou légèrement arrondies à leur base.

19. Procédé selon la revendication 18, **caractérisé en ce que** plusieurs lignes de commande sont courbées ou légèrement arrondies à leur base et **en ce que** les parties inférieures s'étendent en parallèle ou pratiquement en parallèle l'une par rapport à l'autre.

20. Procédé selon l'une quelconque des revendications précédentes, **caractérisé en ce que** le rapport de transmission est automatiquement modifié dans certains cas limites prédéterminés, de telle sorte que l'on obtient une transition automatique à une ligne de commande suivante, supérieure ou inférieure.

21. Procédé de commande du rapport de transmission d'un variateur de vitesse du type à courroie dans une unité de transmission pour un véhicule à moteur, comprenant l'étape consistant à commander le rapport de transmission dans un mode de basculement de telle sorte que le rapport de transmission est commandé en fonction de signaux de changement de vitesse fournis par un conducteur du véhicule à moteur, en suivant ainsi plusieurs lignes de commande fixes prédéterminées (A - B - C - D - E - F) conformément à un variogramme définissant un champ opérationnel englobant des vitesses du moteur, des vitesses du véhicule et une origine, **caractérisé en ce que** les lignes de commande (A - B - C - D - E - F) sont déterminées de telle sorte qu'une différence de vitesse de rotation du moteur dans chacune de plusieurs transitions successives entre les lignes de commande (A - B - C - D - E - F) à une vitesse particulière du véhicule (V) diffère, par rapport à la différence de vitesse de rotation dans une transition directement précédente lors d'une multiplication et lors d'une démultiplication, d'une valeur qui est inférieure à 10 % de la plus grande différence de vitesse de rotation, parmi les deux différences de vitesse de rotation successives.

22. Procédé selon la revendication 21, **caractérisé en ce que**, dans au moins une partie du champ opérationnel, la différence entre la plus grande différence de vitesse de rotation et la plus petite différence de vitesse rotation est maintenue en dessous de 10 % de la plus grande différence de vitesse rotation mentionnée ci-dessus.

23. Dispositif pour la mise en oeuvre du procédé selon l'une quelconque des revendications précédentes, constitué par un variateur de vitesse du type à courroie comportant des poulies et une courroie associée et une unité de commande hydraulique (20) avec laquelle on peut modifier le rapport de transmission du variateur de vitesse (3) du type à courroie, par lequel des moitiés de poulies (6 - 9) sont en mesure de se déplacer en direction axiale et sont commandés à l'aide de cylindres pneumatiques (16 - 17) qui sont commandés, à leur tour, par au moins une soupape de réglage (18 - 19), **caractérisé en ce que** cette soupape de réglage (18) est commandée par un actionneur qui est commandé, à son tour, par une unité de commande électronique (24) qui garantit la mise en oeuvre d'une commande conformément aux lignes de commande et qui est conforme au procédé mentionné ci-dessus.

24. Dispositif selon la revendication 23, **caractérisé en ce que** ladite unité de commande 24 est conçue pour la mise en oeuvre de deux procédés, plus précisément un procédé par lequel la commande est changée automatiquement d'une part et une commande par laquelle le procédé tel que décrit dans l'une quelconque des revendications 1 à 22 est appliqué d'autre part.
